# EUROPEAN PATENT SPECIFICATION

(11) **EP 2 735 958 B1**
(45) Date of publication and mention of the grant of the patent: **04.04.2018**
(21) Application number: 13193977.9
(22) Date of filing: 22.11.2013
(51) Int. Cl.: G06F 3/0488, G06F 3/0485, G06F 3/0482

(54) **Input device, display apparatus, display system and method of controlling the same**
Eingabevorrichtung, Anzeigevorrichtung, Anzeigesystem und Steuerungsverfahren dafür
Dispositif d'entrée, appareil d'affichage, système d'affichage et procédé de commande de celui-ci

(30) Priority: 23.11.2012 KR 20120133534
(43) Date of publication of application: 28.05.2014
(73) Proprietor: Samsung Electronics Co., Ltd., Gyeonggi-do 443-742 (KR)
(72) Inventor: Yoon, Yeo-ri, Chungcheongbuk-do (KR); Lee, Chang-soo, Seoul (KR); Lee, Sang-hee, Seoul (KR)
(74) Representative: Appleyard Lees IP LLP

(56) References cited:
- WO-A1-2012/029558
- US-A1- 2007 222 764
- US-A1- 2012 162 542

## Description

### BACKGROUND

### Field

Apparatuses and methods consistent with the exemplary embodiments relate to display systems and methods of controlling the same.

### Description of the Related Art

Until recently, a touch sensor of a touch remote controller used together with a display apparatus had a structure where a user had to look directly at the touch sensor and press a designated area of the touch sensor in order to perform an operation separately defined on a touch pad, for example, to perform a channel change operation or a volume control operation or the like.

Also, the touch sensor had an entirely flat surface, so that the same touch operation can be performed wherever a user touches.

Further, a separate learning process is needed for a user to carry out certain control operations.

US 2012/0162542 discloses an audio/visual touch-base interface. EP 2613232A1 discloses a touch based interface for use in a car.

### SUMMARY

The invention is defined according to the appended claims.

### BRIEF DESCRIPTION OF THE DRAWINGS

The above and/or other aspects will become apparent and more readily appreciated from the following description of exemplary embodiments, taken in conjunction with the accompanying drawings, in which:
FIG. 1 is a block diagram of a display system according to an exemplary embodiment;
FIG. 2 is a schematic plan view of a touch sensor included in an input device for the display apparatus according to an exemplary embodiment;
FIG. 3 is a schematic section view of the touch sensor of FIG. 2 from a bottom view;
FIG. 4 is a schematic section view of a touch sensor included in an input device for a display apparatus from a bottom view, according to another exemplary embodiment;
FIG. 5 is a schematic plan view of a touch sensor included in an input device for a display apparatus from a top view, according to still another exemplary embodiment;
FIG. 6 is a schematic plan view of a touch sensor included in an input device for a display apparatus from a top view, according to yet another exemplary embodiment;
FIG. 7 is a schematic view showing an on screen display (OSD) displayed sliding from an edge of the screen, on the screen of the display apparatus according to an exemplary embodiment;
FIG. 8 is a schematic view showing a scroll operation in a menu item displayed sliding from the edge of the screen in accordance with a touch input, on the screen of the display apparatus according to an exemplary embodiment the display apparatus;
FIG. 9 is a flowchart illustrating a control method of the display system according to an exemplary embodiment; and
FIG. 10 is a flowchart illustrating a control method of the display system according to another exemplary embodiment.

### DETAILED DESCRIPTION OF EXEMPLARY EMBODIMENTS

Below, exemplary embodiments will be described in detail with reference to accompanying drawings.

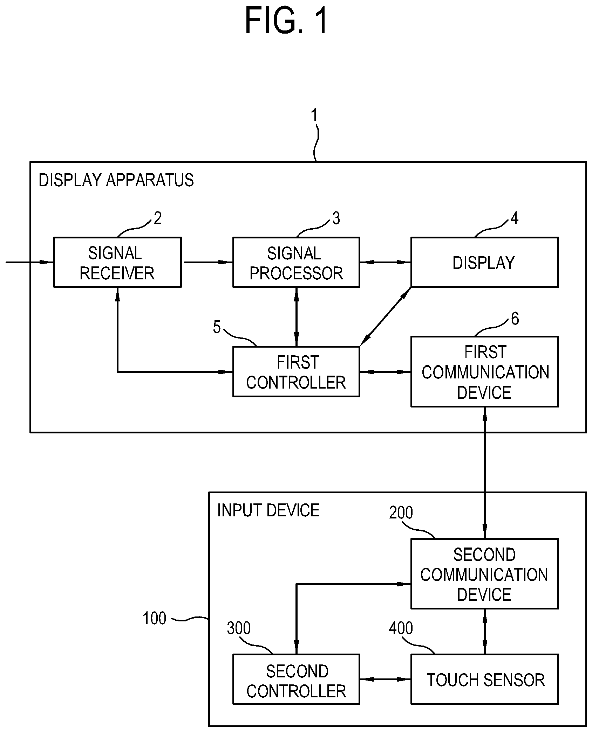

FIG. 1 is a block diagram of a display system according to an exemplary embodiment;

As shown in FIG. 1, the display system according to an exemplary embodiment includes a display apparatus 1 and an input device 100.

The display apparatus 1 may include various apparatuses which display an image. In this exemplary embodiment, a television (TV) will be described as an example of the display apparatus 1. However, this is only exemplary, since the display apparatus is not limited to a television.

The display apparatus 1 includes a signal receiver 2 which receives a video signal; a signal processor 3 which processes a video signal; a display 4 which displays an image based on a video signal; a first communication device 6 which communicates with an input device 100 receiving a user's touch input; and a first controller 5 which activates a menu from one edge of the screen corresponding to the touch input among a plurality of edges in response to the touch input.

The signal receiver 2 of the display apparatus 1 may receive a video signal from an external source through a connector (not shown) or may receive a video signal from an interior storage (not shown). The signal receiver 2 sends the received video signal to the signal processor 3.

The signal processor 3 of the display apparatus 1 processes the video signal received by the signal receiver 2 to be displayable on the display 4, and sends the processed video signal to the display 4.

The display 4 of the display apparatus 1 displays an image based on the video signal processed by the signal processor 3.

The communication device 6 of the display apparatus 1 communicates with the input device 100 which receives a user's touch input, and receives a command corresponding to the user's touch input, thereby transmitting the command to the first controller 5.

The controller 5 of the display apparatus 1 activates a menu from one edge of the screen corresponding to the touch input among a plurality of edges of the screen in response to the touch input from the input device 100. In general, the screen of the display apparatus 1 has all four edges, i.e., top, bottom, left and right edges. Also, the menu activated corresponding to the touch input may include an on screen display (OSD) or a similar menu.

The input device 100 of the display apparatus 1 includes a touch remote controller for remotely controlling the display apparatus 1, but is not limited thereto. Alternatively, the input device 100 may include any device which has a touch function and transmits an input to the display apparatus 1.

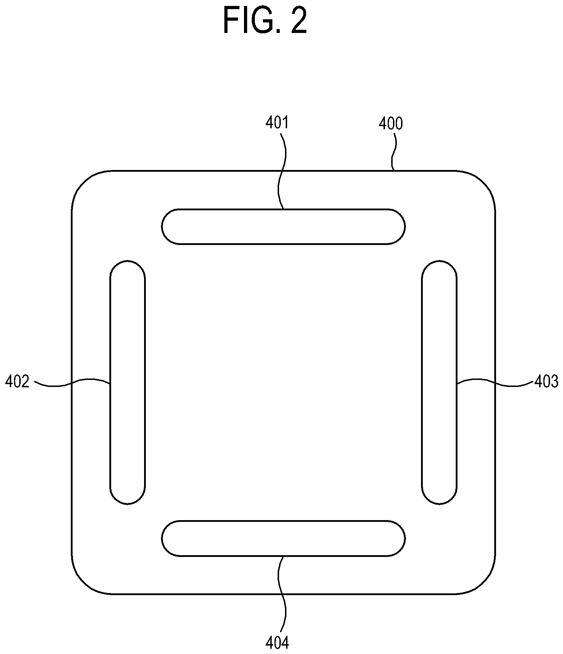

The input device 100 includes a second communication device 200 which communicates with the display apparatus 1; a touch sensor 400 which includes predetermined regions 401, 402, 403, 404, 402', 403', 404', 405, 406, 407, 408, and 409 corresponding to the plural edges of the screen of the display apparatus 1, and receives a user's touch input; and a controller 300 which determines a direction of a touch input with respect to the predetermined regions 401, 402, 403, 404, 402', 403', 404', 405, 406, 407, 408, and 409 as shown in Figs. 2-6..

The second communication device 200 of the input device 100 may transmit a command corresponding to a user's touch input to the first communication device 6 of the display apparatus 1.

The touch sensor 400 of the input device 100 includes the predetermined regions 401, 402, 403, 404, 402', 403', 404', 405, 406, 407, 408, and 409 corresponding to the plurality of edges that the screen of the display apparatus 1. Therefore, the number of predetermined regions provided in the touch sensor 400 corresponds to the number of edges that the screen of the display apparatus 1 has. The predetermined regions 401, 402, 403, 404, 402', 403', 404', 405, 406, 407, 408, and 409 of the touch sensor 400 are provided to receive a user's touch input. Here, a user's touch input on the predetermined regions 401, 402, 403, 404, 402', 403', 404', 405, 406, 407, 408, and 409 may be achieved by various touch input methods. For example, the touch input methods may include a resistive method, a capacitive method, a piezo-resistive method, etc.

The predetermined regions 401, 402, 403, 404, 402', 403', 404', 405, 406, 407, 408, and 409 may be distinguished from the other regions of the touch sensor 400 by various shapes, texture, etc.

Specifically, the predetermined regions 401, 402, 403, 404, 402', 403', 404', 405, 406, 407, 408, and 409 may have various shapes as follows.

FIG. 2 is a schematic plan view of the touch sensor 400 included in the input device 100 for the display apparatus 1 according to an exemplary embodiment.

As shown in FIG. 2, the touch sensor 400 of the input device 100 includes four predetermined regions 401, 402, 403, and 404 corresponding to four edges that the screen of the display apparatus 1 has. In this exemplary embodiment, the predetermined regions 401, 402, 403, and 404 protrude from the plane of the touch sensor 400, and may be shaped like a predetermined bar.

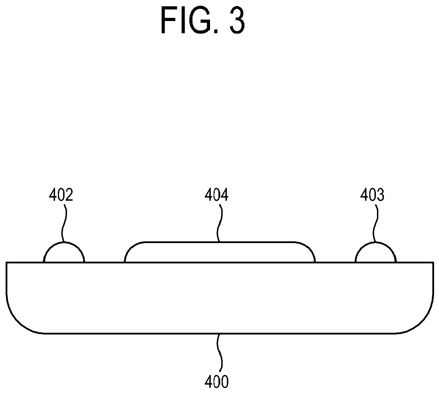

FIG. 3 is a schematic section view of the touch sensor 400 of FIG. 2 from a bottom view.

As shown in FIG. 3, such predetermined regions 401 (not shown), 402, 403, and 404 which may be shaped like a bar, protrude to have a height and a width so as to be sensed by a user's finger, and may have a predetermined length.

On the other hand, the predetermined regions 401, 402, 403, and 404 may be grooved to have a predetermined depth, which is different from a protrusion from the plane of the touch sensor 400.

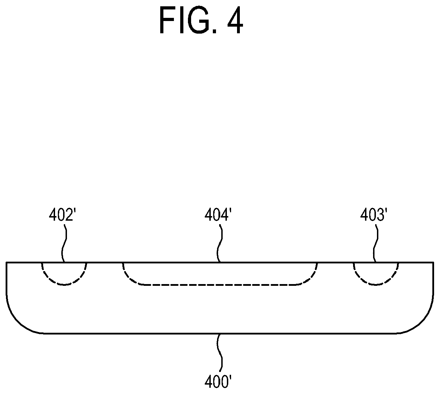

FIG. 4 is a schematic section view of a touch sensor 400 included in an input device 100 for a display apparatus 1 from a bottom view, according to another exemplary embodiment;

As shown in FIG. 4, predetermined regions 402', 403', and 404' provided corresponding to four edges that the screen of the display apparatus 1 has are recessed to have a depth and a width so as to be sensed by a user's finger, and may have a predetermined length.

The predetermined regions 401, 402, 403, 404 may not be individually provided corresponding to four edges that the screen of the display apparatus 1 has, but may be formed as a single body having a shape corresponding to the screen.

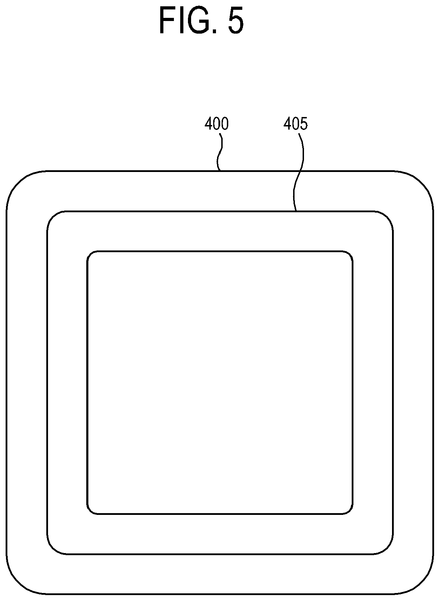

FIG. 5 is a schematic plan view of a touch sensor included in an input device for a display apparatus from a top view, according to still another exemplary embodiment.

In this exemplary embodiment, a rectangular closed curve having a predetermined width and having a rounded corner is illustrated as a predetermined region 405, but is not limited thereto. Alternatively, the predetermined region 405 may have various shapes. For example, the predetermined region 405 may be a circular closed curve.

The predetermined regions 402', 403', and 404' provided corresponding to four edges that the screen of the display apparatus 1 has may be provided in the form of dots that can be sensed by a user's finger.

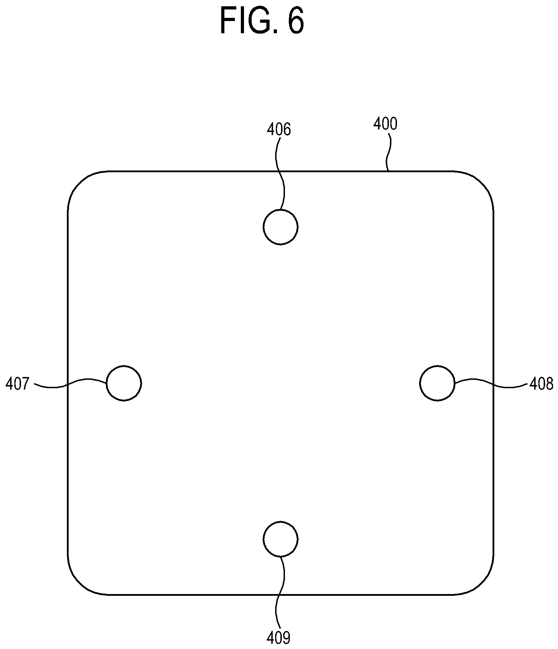

FIG. 6 is a schematic plan view of a touch sensor 400 included in an input device 100 for a display apparatus 1 from a top angle, according to yet another exemplary embodiment. In this embodiment, each dot for the predetermined regions 406, 407, 408, and 409 are shaped like a circle, but is not limited thereto. Alternatively, instead of a dot, the predetermined regions 406, 407, 408, and 409 may have various shapes. For example, the predetermined regions 406, 407, 408, and 409 may be shaped like a diamond.

The foregoing various shapes for the predetermined regions 401, 402, 403, 404, 402', 403', 404', 405, 406, 407, 408, and 409 may be combined. For example, left and right regions may be achieved by grooves, and top and bottom regions may be achieved by protrusions. For example, only the top and bottom regions may be achieved by protrusions, and left and right regions may be provided on the same plane as the touch sensor 400 without any specific shape.

The predetermined regions of the touch sensor 400 in the input device 100 may have different textures. For example, the entire regions of the touch sensor 400 may be even or smooth. However, only the portion corresponding to the predetermined region may be coarse.

Alternatively, the predetermined region of the touch sensor 400 may be provided as only a designated area without having any separate shape.

Referring back to FIG. 1, the second controller 300 of the input device 100 may determine the directions of the touch input with respect to the predetermined regions 401, 402, 403, 404, 402', 403', 404', 405, 406, 407, 408 and 409.

In other words, a direction of a user's touch input may include a direction traversing the predetermined regions 401, 402, 403, 404, 402', 403', 404', 405, 406, 407, 408, and 409 and a direction moving along the predetermined regions 401, 402, 403, 404, 402', 403', 404', 405, 406, 407, 408, and 409.

If it is determined that the direction of the user's touch input traverses the predetermined regions 401, 402, 403, 404, 402', 403', 404', 405, 406, 407, 408, and 409, the second controller 300 of the input device 100 for the display apparatus 1 may issue a command for activating a menu from one edge of the screen corresponding to the user's touch input among the plurality of edges on the screen, and transmit the command to the first communication device 6 of the display apparatus 1.

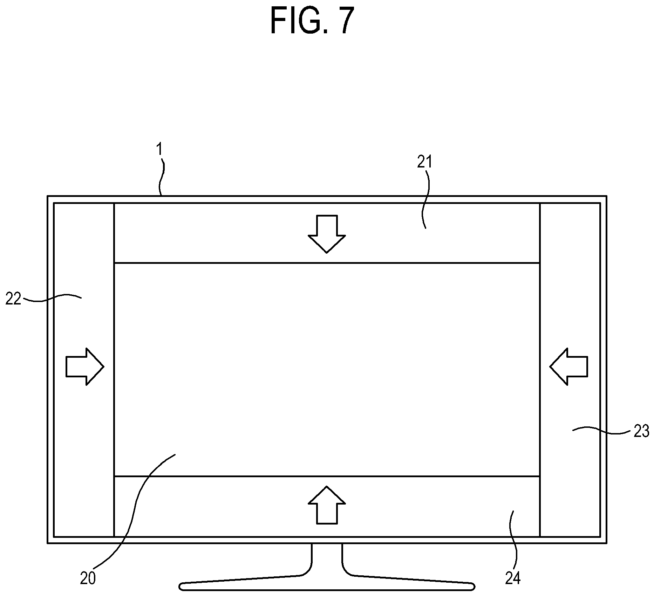

FIG. 7 is a schematic view showing an on screen display (OSD) displayed sliding from an edge of the screen, on the screen of the display apparatus 1 according to an exemplary embodiment.

For example, if a user touches the predetermined region 401 of the touch sensor 400 of the input device 100 in a transverse direction from a top to a bottom, the display apparatus 1 displays an OSD 21 sliding from a top edge of the screen in response to the transverse touching operation. If a user touches the predetermined region 402 of the touch sensor 400 of the input device 100 in a transverse direction from left to right, the display apparatus 1 displays an OSD 22 sliding from a left edge of the screen in response to the transverse touching operation. If a user touches the predetermined regions 403 of the touch sensor 400 of the input device 100 in a transverse direction from right to left, the display apparatus 1 displays an OSD 23 sliding from a right edge of the screen in response to the transverse touching operation. If a user touches the predetermined region 404 of the touch sensor 400 of the input device 100 in a transverse direction from a bottom to a top, the display apparatus 1 displays an OSD 24 sliding from a bottom edge of the screen in response to the transverse touching operation.

Then, if a user touches the predetermined region 401 of the touch sensor 400 of the input device 100 in a transverse direction from a bottom to a top, the display apparatus 1 makes an OSD 24 displayed from the top edge of the screen disappear sliding in response to the transverse touching operation. If a user touches the predetermined region 402 of the touch sensor 400 of the input device 100 in a transverse direction from a right to a left, the display apparatus 1 makes an OSD 22 displayed from the left edge of the screen disappear sliding in response to the transverse touching operation. If a user touches the predetermined region 403 of the touch sensor 400 of the input device 100 in a transverse direction from a left to a right, the display apparatus 1 makes an OSD 23 displayed from the right edge of the screen disappear sliding in response to the transverse touching operation. If a user touches the predetermined region 404 of the touch sensor 400 of the input device 100 in a transverse direction from a top to a bottom, the display apparatus 1 makes an OSD 24 displayed from the bottom edge of the screen disappear sliding in response to the transverse touching operation.

Besides the foregoing method of making the OSD disappear sliding in response to the reverse transverse touching operation, the displayed OSD may disappear if there is no more input within a predetermined time after displaying the OSD.

If it is determined that the direction of the user's touch input follows the predetermined regions 401, 402, 403, 404, 402', 403', 404', 405, 406, 407, 408, and 409, the second controller 300 of the input device 100 for the display apparatus 1 may issue a command for implementing a scroll operation with regard to a menu displayed on one edge corresponding to the user's touch input among the plurality of edges on the screen, and transmit the command to the first communication device 6 of the display apparatus 1.

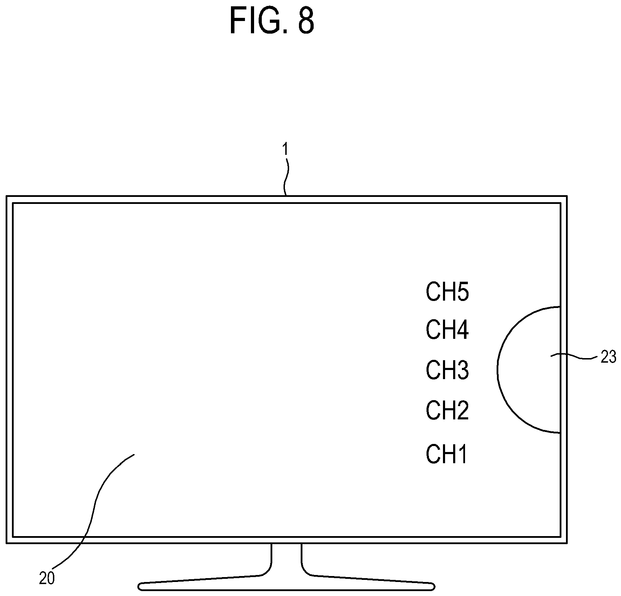

FIG. 8 is a schematic view showing a scroll operation in a menu item displayed sliding from the edge of the screen in accordance with a touch input, on the screen of the display apparatus 1 according to an exemplary embodiment the display apparatus;

As shown in FIG. 8, for example, suppose that a channel selection menu is displayed on a right edge of the screen of the display apparatus 1 in response to a user's touch input traversing the predetermined regions 403. In the state that the channel selection menu is displayed on the right edge of the screen of the display apparatus 1, if the user's touch input is generated following the predetermined region 403, the second controller 300 of the input device 100 may issue a command for implementing a scroll operation with regard to the channel selection menu displayed sliding from the right edge of the screen of the display apparatus 1, and transmit the command to the first communication device 6 of the display apparatus 1.

As described above, according to an exemplary embodiment, the predetermined regions are designated on the touch sensor 400 of the input device 100, so that a user can touch the predetermined region in tangibly traversing and rubbing directions without directly looking the touch sensor 400, thereby transmitting a defined certain signal to the display apparatus 1.

Also, a control direction in the input device 100 is consistent with a position and a displaying direction of a corresponding menu, so that a user can call a certain menu without any separate learning.

A control method for a display system including the foregoing display apparatus and the foregoing input device is described as follows.

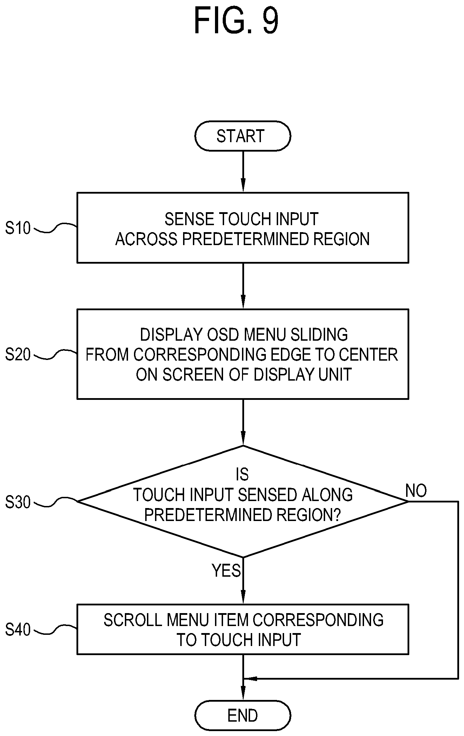

FIG. 9 is a flowchart illustrating a control method of the display system according to an exemplary embodiment.

First, a user touches the predetermined region on the touch sensor of the input device in a transverse direction from the outside to the inside.

If the touch input traversing the predetermined region is sensed (operation S10), the second controller of the input device issues a command for activating a menu corresponding to the user's touch input from one edge of the screen among the plural edges of the screen and transmits the command to the first communication device of the display apparatus, thereby allowing the display apparatus to display a menu sliding in a direction from the corresponding edge of the screen to the center of the screen (operation S20).

Then, the second controller of the input device determines whether a touch input following the predetermined region is further sensed (operation S30).

If the touch input following the predetermined region is additionally sensed (Yes of operation S30), the second controller of the input device issues a command for implementing a scroll operation with regard to the menu displayed corresponding to the user's touch input from one edge among the plural edges of the screen, and transmits the command to the first communication device of the display apparatus, thereby allowing the menu on the display apparatus to be scrolled in response to the touch input (operation S40).

As described above, a predetermined time may be set up between the touch input traversing the predetermined region and the touch input following the predetermined region. Thus, if there are no more inputs within the predetermined time after displaying the menu, the displayed menu may disappear.

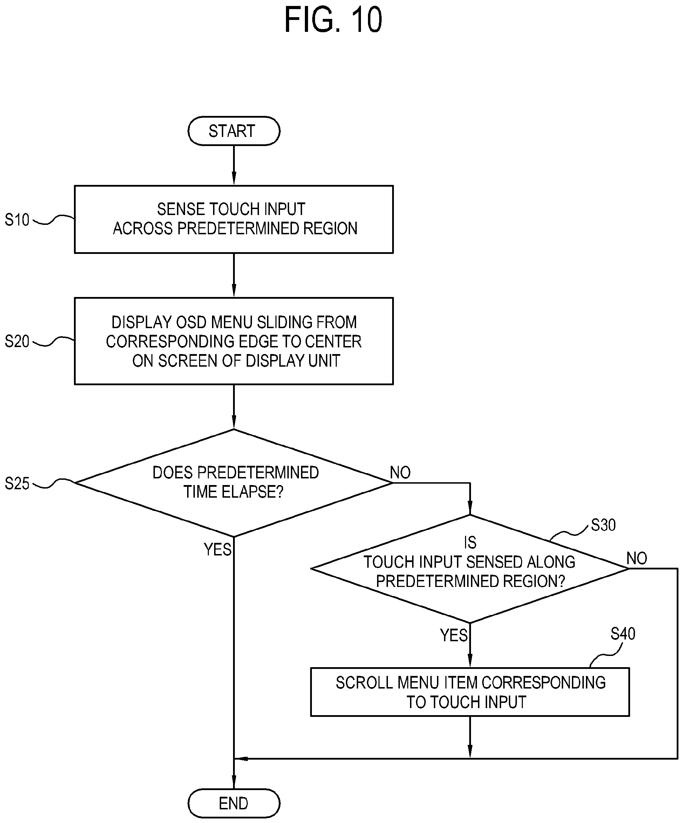

FIG. 10 is a flowchart illustrating a control method of the display system according to another exemplary embodiment.

In this exemplary embodiment, an operation (operation S25) of determining whether a predetermined time is elapsed is added between the operations S20 and S30 of FIG. 9.

First, a user touches the predetermined region on the touch sensor of the input device in a transverse direction from the outside to the inside.

If the touch input traversing the predetermined region is sensed (operation S10), the second controller of the input device issues a command for activating a menu corresponding to the user's touch input from one edge among the plural edges of the screen and transmits the command to the first communication device of the display apparatus, thereby allowing the display apparatus to display a menu sliding in a direction from the corresponding edge of the screen to the center of the screen (operation S20).

Then, it is determined whether a predetermined time has elapsed (operation S25).

If the predetermined time has elapsed (Yes of operation S25), the displayed menu disappears in a sliding manner.

If the predetermined time has not elapsed (No of operation S25), the second controller of the input device further determines whether the touch input following the predetermined region is additionally sensed (operation S30).

If the touch input following the predetermined region is additionally sensed (Yes of operation S30), the second controller of the input device issues a command for implementing a scroll operation with regard to the menu displayed corresponding to the user's touch input from one edge among the plural edges of the screen and transmits the command to the first communication device of the display apparatus, thereby allowing the menu on the display apparatus to be scrolled in response to the touch input (operation S40).

As described above, a predetermined time may be set up between the touch input traversing the predetermined region and the touch input following the predetermined region. Thus, if there are no more inputs within the predetermined time after displaying the menu, the displayed menu may disappear.

As described above, according to an exemplary embodiment, the predetermined regions are allocated on the touch sensor of the input device, so that a user can touch the predetermined region in tangibly traversing and rubbing directions without directly looking at the touch sensor, thereby transmitting a defined certain signal to the display apparatus.

A control direction in the input device is consistent with a position and a displaying direction of a corresponding menu, so that a user can call a certain menu without any separate learning.

Although a few exemplary embodiments have been shown and described, it will be appreciated by those skilled in the art that changes may be made in these exemplary embodiments without departing from the principles of the exemplary embodiments, the scope of which is defined in the appended claims.

## Claims

1. A display system comprising:
a remote control input device (100) comprising a touch input unit (400) having a touch region (401, 402, 403, 404, 402', 403', 404', 405, 406, 407, 408, 409) configured to detect a touch input, and a first protrusion provided proximate a first edge of the touch region and elongated along the first edge of the touch region; and
a display device (1) comprising:
a display (4);
an image processor (3) configured to process a content to display a content image on the display;
a signal receiver (6) configured to receive a signal corresponding to the touch input detected by the touch input unit from the input device; and
a controller (5) configured to control the image processor to display a first on-screen display, OSD, menu proximate a first edge of the display in response to receiving from the input device a first signal indicating a first touch input moving across the first protrusion toward an inner region of the touch region in a first input direction such that the first OSD menu is displayed slidingly from the first edge of the display in a first display direction.

2. The display system according to claim 1, wherein the first edge area of the display (4) corresponds to a first portion of the touch region (401, 402, 403, 404, 402', 403', 404', 405, 406, 407, 408, 409) from which the first touch input moves from.

3. The display system according to claim 1, wherein the first input direction corresponds to the first display direction.

4. The display system according to claim 1, wherein the first protrusion is provided between a first edge portion of the touch region (401, 402, 403, 404, 402', 403', 404', 405, 406, 407, 408, 409) and the inner region of the touch region.

5. The display system according to claim 1, wherein the controller (5) is configured to control the image processor to display the first OSD menu to slidingly disappear towards the first edge of the display in a second display direction opposed to the first display direction in response to receiving a third signal indicating a third touch input moving across the first protrusion in a third input direction opposing the first input direction while the first OSD menu is displayed.

6. The display system according to claim 1, wherein the controller (5) is configured to control the image processor to scroll the first OSD menu in response to receiving from the input device a subsequent signal indicating a subsequent touch input while the first OSD menu is displayed.

7. The display system according to claim 6, wherein the subsequent touch input moves along the first protrusion in a second input direction different from the first input direction.

8. The display system according to claim 1, wherein the first protrusion has a lengthwise shape along the first edge of the touch region (401, 402, 403, 404, 402', 403', 404', 405, 406, 407, 408, 409).

9. A control method of a display system comprising a remote control input device including an input device with a touch input unit having a touch region configured to detect a touch input; and a display device, the control method comprising:
detecting a first touch input moving across a first protrusion toward an inner region, the first protrusion provided proximate a first edge of the touch region and elongated along the first edge of the touch region;
transmitting a first signal corresponding to the first touch input detected by the touch input unit from the input device to the display device; and
displaying a first on-screen display, OSD, menu proximate a first edge of the display device as sliding in a first display direction from a first edge of the display in response to the received first signal.

10. The control method of the display system according to claim 9, wherein the first edge of the display device corresponds to the first edge of the touch region from which the first touch input moves.

## Patentansprüche

1. Anzeigesystem, umfassend:
eine Fernbedienungs-Eingabevorrichtung (100) mit einer Berührungseingabeeinheit (400) mit einer Berührungsregion (401, 402, 403, 404, 402', 403', 404', 405, 406, 407, 408, 409), ausgelegt zum Detektieren einer Berührungseingabe, und einem ersten Vorsprung, der in der Nähe eines ersten Rands der Berührungsregion vorgesehen ist und entlang des ersten Rands der Berührungsregion verläuft; und
eine Anzeigevorrichtung (1), umfassend:
eine Anzeige (4);
einen Bildprozessor (3), ausgelegt zum Verarbeiten eines Inhalts zur Anzeige eines Inhaltsbildes auf der Anzeige;
einen Signalempfänger (6), ausgelegt zum Empfangen eines Signals entsprechend der durch die Berührungseingabeeinheit detektierten Berührungseingabe von der Eingabevorrichtung; und
eine Steuerung (5), ausgelegt zum Steuern des Bildprozessors zur Anzeige eines ersten Bildschirmanzeige- bzw. OSD-Menüs in der Nähe eines ersten Rands der Anzeige als Reaktion auf Empfang eines ersten Signals von der Eingabevorrichtung, das eine erste Berührungseingabe angibt, die sich über den ersten Vorsprung in Richtung einer inneren Region der Berührungsregion in einer ersten Eingaberichtung bewegt, dergestalt, dass das erste OSD-Menü gleitend von dem ersten Rand der Anzeige in einer ersten Anzeigerichtung angezeigt wird.

2. Anzeigesystem nach Anspruch 1, wobei der erste Randbereich der Anzeige (4) einem ersten Teil der Berührungsregion (401, 402, 403, 404, 402', 403', 404', 405, 406, 407, 408, 409) entspricht, wovon aus sich die erste Berührungseingabe bewegt.

3. Anzeigesystem nach Anspruch 1, wobei die erste Eingaberichtung der ersten Anzeigerichtung entspricht.

4. Anzeigesystem nach Anspruch 1, wobei der erste Vorsprung zwischen einem ersten Randteil der Berührungsregion (401, 402, 403, 404, 402', 403', 404', 405, 406, 407, 408, 409) und der inneren Region der Berührungsregion vorgesehen ist.

5. Anzeigesystem nach Anspruch 1, wobei die Steuerung (5) ausgelegt ist zum Steuern des Bildprozessors, als Reaktion auf Empfang eines dritten Signals, das eine dritte Berührungseingabe angibt, die sich in einer der ersten Eingaberichtung entgegengesetzten dritten Eingaberichtung über den ersten Vorsprung bewegt, während das erste OSD-Menü angezeigt wird, das erste OSD-Menü so anzuzeigen, dass es gleitend in einer der ersten Anzeigerichtung entgegengesetzten zweiten Anzeigerichtung in Richtung des ersten Rands der Anzeige verschwindet.

6. Anzeigesystem nach Anspruch 1, wobei die Steuerung (5) ausgelegt ist zum Steuern des Bildprozessors, als Reaktion auf Empfang eines nachfolgenden Signals von der Eingabevorrichtung, das eine nachfolgende Berührungseingabe, während das erste OSD-Menü angezeigt wird, angibt, das erste OSD-Menü zu rollen.

7. Anzeigesystem nach Anspruch 6, wobei sich die nachfolgende Berührungseingabe entlang dem ersten Vorsprung in einer von der ersten Eingaberichtung verschiedenen zweiten Eingaberichtung bewegt.

8. Anzeigesystem nach Anspruch 1, wobei der erste Vorsprung entlang des ersten Rands der Berührungsregion (401, 402, 403, 404, 402', 403', 404', 405, 406, 407, 408, 409) eine längsgerichtete Form aufweist.

9. Steuerverfahren eines Anzeigesystems, das eine Fernbedienungs-Eingabevorrichtung, die eine Eingabevorrichtung mit einer Berührungseingabeeinheit mit einer zum Detektieren einer Berührungseingabe ausgelegten Berührungsregion umfasst; und eine Anzeigevorrichtung umfasst, wobei das Steuerverfahren Folgendes umfasst:
Detektieren einer ersten Berührungseingabe, die sich über einen ersten Vorsprung in Richtung einer inneren Region bewegt, wobei der erste Vorsprung in der Nähe eines ersten Rands der Berührungsregion vorgesehen ist und entlang des ersten Rands der Berührungsregion verläuft;
Senden eines ersten Signals entsprechend der durch die Berührungseingabeeinheit detektierten ersten Berührungseingabe von der Eingabevorrichtung zur Anzeigevorrichtung; und
Anzeigen eines ersten Bildschirmanzeige- bzw. OSD-Menüs in der Nähe eines ersten Rands der Anzeigevorrichtung als in einer ersten Anzeigerichtung von einem ersten Rand der Anzeige als Reaktion auf das empfangene erste Signal gleitend.

10. Steuerverfahren des Anzeigesystems nach Anspruch 9, wobei der erste Rand der Anzeigevorrichtung dem ersten Rand der Berührungsregion entspricht, wovon aus sich die erste Berührungseingabe bewegt.

## Revendications

1. Système d'affichage comprenant :
un dispositif d'entrée de commande à distance (100) comprenant une unité d'entrée tactile (400) ayant une région tactile (401, 402, 403, 404, 402', 403', 404', 405, 406, 407, 408, 409) configurée pour détecter une entrée tactile, et une première protubérance fournie à proximité d'un premier bord de la région tactile et allongée le long du premier bord de la région tactile ; et
un dispositif d'affichage (1) comprenant :
un écran (4) ;
un processeur d'image (3) configuré pour traiter un contenu pour afficher une image de contenu sur l'écran ;
un récepteur de signal (6) configuré pour recevoir un signal correspondant à l'entrée tactile détectée par l'unité d'entrée tactile à partir du dispositif d'entrée ; et
un contrôleur (5) configuré pour commander le processeur d'image pour afficher un premier menu d'affichage à l'écran, OSD, à proximité d'un premier bord de l'écran en réponse à la réception d'un premier signal à partir du dispositif d'entrée indiquant une première entrée tactile se déplaçant sur la première protubérance vers une région intérieure de la région tactile dans une première direction d'entrée, de sorte que le premier menu OSD est affiché de façon coulissante à partir du premier bord de l'écran dans une première direction d'affichage.

2. Système d'affichage selon la revendication 1, dans lequel la première zone de bord de l'écran (4) correspond à une première partie de la région tactile (401, 402, 403, 404, 402', 403', 404', 405, 406, 407, 408, 409) à partir de laquelle la première entrée tactile se déplace.

3. Système d'affichage selon la revendication 1, dans lequel la première direction d'entrée correspond à la première direction d'affichage.

4. Système d'affichage selon la revendication 1, dans lequel la première protubérance est prévue entre une première partie de bord de la région tactile (401, 402, 403, 404, 402', 403', 404', 405, 406, 407, 408, 409) et la région intérieure de la région tactile.

5. Système d'affichage selon la revendication 1, dans lequel le contrôleur (5) est configuré pour commander le processeur d'image pour afficher le premier menu OSD pour disparaître de manière coulissante vers le premier bord de l'écran dans une seconde direction d'affichage opposée à la première direction d'affichage en réponse à la réception d'un troisième signal indiquant une troisième entrée tactile se déplaçant sur la première protubérance dans une troisième direction d'entrée opposée à la première direction d'entrée tandis que le premier menu OSD est affiché.

6. Système d'affichage selon la revendication 1, dans lequel le contrôleur (5) est configuré pour commander le processeur d'image pour faire défiler le premier menu OSD en réponse à la réception d'un signal suivant à partir du dispositif d'entrée indiquant une entrée tactile suivante tandis que le premier menu OSD est affiché .

7. Système d'affichage selon la revendication 6, dans lequel l'entrée tactile suivante se déplace le long de la première protubérance dans une seconde direction d'entrée différente de la première direction d'entrée.

8. Système d'affichage selon la revendication 1, dans lequel la première protubérance a une forme longitudinale le long du premier bord de la région tactile (401, 402, 403, 404, 402', 403', 404', 405, 406, 407, 408, 409).

9. Procédé de commande d'un système d'affichage comprenant un dispositif d'entrée de commande à distance comprenant un dispositif d'entrée avec une unité d'entrée tactile ayant une région tactile configurée pour détecter une entrée tactile ; et un dispositif d'affichage, le procédé de commande comprenant de :
détecter une première entrée tactile se déplaçant sur une première protubérance vers une région intérieure, la première protubérance étant prévue à proximité d'un premier bord de la région tactile et allongée le long du premier bord de la région tactile ;
transmettre un premier signal correspondant à la première entrée tactile détectée par l'unité d'entrée tactile à partir du dispositif d'entrée au dispositif d'affichage ; et
afficher un premier menu d'affichage à l'écran, OSD, à proximité d'un premier bord du dispositif d'affichage de façon coulissante dans une première direction d'affichage à partir d'un premier bord de l'écran en réponse au premier signal reçu.

10. Procédé de commande du système d'affichage selon la revendication 9, dans lequel le premier bord du dispositif d'affichage correspond au premier bord de la région tactile à partir de laquelle la première entrée tactile se déplace.
